Europäisches Patentamt

European Patent Office

Office européen des brevets

(19)

(11) **EP 0 732 383 A2**

(12) **EUROPÄISCHE PATENTANMELDUNG**

(43) Veröffentlichungstag:
    **18.09.1996 Patentblatt 1996/38**

(51) Int. Cl.⁶: $C09D \ 167/00$

(21) Anmeldenummer: 96103611.8

(22) Anmeldetag: **08.03.1996**

(84) Benannte Vertragsstaaten:
    **AT BE CH DE DK ES FR GB GR IE IT LI LU MC NL
    PT SE**

(30) Priorität: **14.03.1995 DE 19508669**

(71) Anmelder: **Degussa Aktiengesellschaft
    D-60311 Frankfurt (DE)**

(72) Erfinder: **Piana, Hermann, Dr.
    White Plains, N.Y. 10605 (US)**

(54) **Wärmehärtbare Überzugsmasse**

(57)    Wärmehärtbare Überzugsmasse mit der Zusammensetzung

A) 10 - 50 Gew.-% Polyester aus

    a) aromatischen und aliphatischen und/oder cycloaliphatischen Polycarbonsäuren, wobei unter den Polycarbonsäuren

        aa) 40 - 90 Mol-% aromatische Polycarbonsäuren und
        bb) 60 - 10 Mol-% aliphatische und/oder cycloaliphatische Polycarbonsäuren sind, mit der Bedingung, daß bei Einsatz von Dicarbonsäuren wenigstens 50 Mol-% der verwendeten Dicarbonsäuren cyclische Dicarbonsäuren sind,

    mit
    b) Polyolen, wobei unter den Polyolen

        aa) 30 - 85 Mol-% Neopentylglycol und
        bb) > 15 - < 50 Mol-% 1,3-Propandiol sind, mit der Bedingung, daß bei Einsatz von Diolen wenigstens 30 Mol-% der eingesetzten Diole aliphatische Seitenketten aufweisen,

wobei die Menge der Komponenten a) und b) die folgende Gleichung erfüllen muß

$$X = \frac{n1 - n2(F-2)}{n2},$$

in der

n1    die Molzahl der Polyole b),
n2    die Molzahl der Polycarbonsäuren a) und
F    den Mittelwert der molaren Funktionalität der Polycarbonsäuren

bedeutet und

X    einen Wert zwischen 1,05 und 1,5 aufweist;

B) 5 - 40 Gew.-% Vernetzungsmittel
C) 15 - 50 Gew.-% Lösungsmittel sowie ggf.
D) Pigmente und
E) übliche Additive.

EP 0 732 383 A2

Printed by Rank Xerox (UK) Business Services
2.13.4/3.4

**Beschreibung**

Die vorliegende Erfindung betrifft Polyester für die Herstellung von wärmehärtbaren Überzugsmassen. Die betreffenden Polyester sind gekennzeichnet durch den Einbau von sich wiederholenden Einheiten von 1,3-Propandiol, neben Neopentylglycol und mindestens einer cyclischen Dicarbonsäure. Die erhaltenen Polyester sind Bestandteile von wärmehärtbaren Überzugsmassen, die bevorzugt Melaminformaldhydharze und Katalysatoren enthalten. Die Überzugsmasse kann zu einer harten, aber dennoch flexiblen Beschichtung ausgehärtet werden.

Die Verwendung wärmehärtbarer Überzugsmassen, die niedermolekulare Polyester enthalten, als Schutzschicht oder Schutzlack für Materialien wie Stahlbänder, ist Stand der Technik. Eine ideale Schutzschicht haftet gut auf dem Untergrund, ist gleichzeitig hart und flexibel, beständig gegen Witterungseinflüsse, Lösungsmittel, Abrieb und Hitze. Es ist schwierig, ein Optimum all dieser Eigenschaften zu erreichen, da die Verbesserung einer Eigenschaft meist zu Lasten anderer geht. Gerade bei der Bearbeitung und Formgebung von bereits lackierten Metallbändern ist eine hohe Elastizität und Haftung wünschenswert, um ein Abplatzen der Schutzschicht an den Knickstellen zu verhindern. Gleichzeitig sollte die Schutzschicht hart genug sein, um gegen mechanische Einwirkungen beständig zu sein.

Die Härte kann z. B. durch den Einbau eines hohen Anteils von cyclischen, insbesondere aromatischen Dicarbonsäuren in den Polyester erreicht werden. Dadurch werden die Schutzschichten jedoch spröde und brüchig. Ein anderer Ansatz zur Erhöhung der Härte ist die Verwendung von 3- oder mehrwertigen Alkoholen, die zu vernetzten Polyestern führen. Dies führt oft zum Verlust der Flexibilität der erhaltenen Schutzschichten. Außerdem hat man bei vernetzten Polyestern häufig Probleme mit einer unerwünschten Gelierung. Bei der Verwendung von hohen Anteilen von cyclischen Dicarbonsäuren, vor allem Terephthalsäure, wird oft das Kristallisieren oder Ausfallen des Polyesters aus dem Lösungsmittel beobachtet, wodurch eine leichte Verarbeitung der Harze verhindert wird (EP-A 0 397 484).

Aus der EP-0 008 344 sind flüssige Überzugsmittel bekannt, die ein Bindemittel aufweisen, welches folgende Zusammensetzung zeigt:

A.        45-5 Gewichtsprozent Aminoplasten
und B.        55-95 Gewichtsprozent linearen Polyestern mit einem Molgwicht von 1500 bis 5000

wobei die Polyester der Komponente B. durch Kondensieren

von I.        Butandiol, Neopentylglykol, Propandiol sowie weiteren längerkettigen Diolen
mit II.        aromatischen und ggf. aliphatischen Dicarbonsäuren erhalten werden, mit dem Kennzeichen, daß die Komponente I. ein Gemisch darstellt bestehend aus
1.1        5-30 Molprozent Butandiol-(1,n), wobei n den Wert 3 oder 4 annehmen kann,
1.2        95-70 Molprozent Neopentylglykol, das bis zu 60 Molprozent - bezogen auf Neopentylglykol entsprechend 100 Molprozent - durch Propandiol-(1,2) ersetzt sein kann
und 1.3        0-30 Molprozent weiteren Diolen mit primären und/oder sekundären Hydroxylgruppen, die durch eine Kette von mindestens 3 C-Atomen getrennt sind

und daß die Komponente II. ein Gemisch darstellt, bestehend aus

II.1        95-70 Molprozent einer oder mehrerer aromatischer Dicarbonsäuren, die bis zu 30 Molprozent -bezogen auf alle aromatischen Dicarbonsäuren entsprechend 100 Molprozent - durch cycloaliphatische Dicarbonsäuren ersetzt sein können,

und II.2        5-30 Molprozent einer oder mehrerer aliphatischer Dicarbnonsäuren.

Die Überzugsbindemittel gemäß der EP 0 008 344 enthalten damit zwar als Komponente II ein Gemisch von aromatischen und aliphatischen Carbonsäuren, diese Maßnahme führt jedoch allenfalls zu einer Zunahme der Elastizität des Überzugs. Die Härte der Überzüge ist immer noch unbefriedigend.

Häufig werden zur Erhöhung der Flexibilität aliphatische Diole wie 1,6-Hexandiol oder Dicarbonsäuren wie Adipinsäure verwendet, was jedoch jeweils zur Abnahme der Härte der Schutzschichten führt (US-4,140,729 und US-4,393,121).

Jüngst wurde die Verwendung von 2-Methyl-1,3-propandiol für Polyester-Melamin-Einbrennlack beschrieben, die noch ausreichende Härte und Flexibilität besitzen. Allerdings ist die Witterungsbeständigkeit deutlich schlechter als bei herkömmlichen Polyesterlacken (Journal of Coating Technology, 62, S. 791 (1990).

Aus der JP-06-287509-A in Derwent-Ref. Nr. 94-363818/45 gehen Beschichtungsmassen auf Basis eines Polyesters, der NPG und 1,3-Propandiol enthält, und eines Vernetzers hervor.

Es ist Aufgabe der vorliegenden Erfindung, die Nachteile des Standes der Technik zu vermeiden und eine Überzugsmasse, bevorzugt für die Metallbeschichtung, zu schaffen, bei deren Verwendung gute Haftung und Flexibilität sowie relativ hohe Härte bei hoher Witterungsbeständigkeit der Schutzschicht und guter Verarbeitbarkeit des Harzes gewährleistet ist.

Die Aufgabe wird erfindungsgemäß gelöst durch eine wärmehärtbare Überzugsmasse, die bevorzugt zur Ausbildung harter und flexibler Beschichtungen auf Metallgegenständen geeignet ist und sich durch eine Zusammensetzung kennzeichnet von

A) 10 - 50 Gew.-% eines oder mehrerer Polyester, erhältlich durch Verestern eines Gemisches von

   a) aromatischen und aliphatischen und/oder cycloaliphatischen Polycarbonsäuren, wobei unter den Polycarbonsäuren

      aa) 40 - 90 Mol-% aromatische Polycarbonsäuren und
      bb) 60 - 10 Mol-% aliphatische und/oder cycloaliphatische Polycarbonsäuren sind,

   mit der Bedingung, daß bei Einsatz von Dicarbonsäuren wenigstens 50 Mol-% der verwendeten Dicarbonsäuren cyclische Dicarbonsäuren sind, mit
   b) Polyolen, wobei unter den Polyolen

      aa) 30 - 85 Mol-% Neopentylglycol und
      bb) > 15 - < 50 Mol-% 1,3-Propandiol sind,

   mit der Bedingung, daß bei Einsatz von Diolen wenigstens 30 Mol-% der eingesetzten Diole aliphatische Seitenketten aufweisen,

wobei die Menge der Komponenten a) und b) die folgende Gleichung erfüllen muß

$$X = \frac{n1 \cdot n2(F\text{-}2)}{n2},$$

in der

n1     die Molzahl der Polyole b),
n2     die Molzahl der Polycarbonsäuren a) und
F      den Mittelwert der molaren Funktionalität der Polycarbonsäuren

bedeutet und

X      einen Wert zwischen 1,05 und 1,5 aufweist;

B) 5 - 40 Gew.-% partiell mit Monoalkoholen verethertes Polykondensat in Form von

   a) Melamin-Formaldehydharz mit einem Molverhältnis von Melamin zu Formaldehyd von 1 : 4,5 bis 1 : 6,
   b) Benzoguanamin-Formaldehydharz mit einem Molverhältnis von Benzoguanamin zu Formaldehyd von 1 : 2,5 bis 1 : 4 und/oder
   c) Harnstoff-Formaldehydharz mit einem Molverhältnis von Harnstoff zu Formaldehyd von 1 : 2,5 bis 1 : 6;

C) 15 - 50 Gew.-% organische, üblicherweise zur Lackherstellung verwendete Lösungsmittel;

D) 0 - 40 Gew.-% Pigmente; und

E) ggf. Additiven, wie sie üblicherweise zur Lackherstellung verwendet werden, in einer Menge von bis zu 100 Gew.-% zusätzlich bezogen auf 100 Gew.-% der Komponenten A) bis D),
wobei die Komponenten A) - D) zusammen 100 Gew.-% ergeben und die Polycarbonsäuren a) ebenso wie die Polyole b) so ausgewählt sind, daß sie jeweils 100 Mol-% ergeben.

Überraschenderweise kann man mit dieser Zusammensetzung Überzüge erhalten, die eine sehr gute Eigenschaftskombination von hoher Härte und hoher Elastizität aufweisen, wobei eine Härte in der erfindungsgemäßen Größenordnung ansonsten nur in Kombination mit "harten" Diolen wie Ethylenylycol bzw. eine Elastizität dieser Höhe nur in Kombination mit "weichen" Diolen wie Hexandiol erreicht wird.

Dabei wird im Rahmen der Erfindung 1,3-Propandiol nicht als Ersatz für 1,2-Propandiol sondern vielmehr anstatt 1,4-Butandiol verwendet. Insbesondere vereinigt dabei 1,3-Propandiol günstigerweise harte und weiche Eigenschaften, was zu dem überragenden Eigenschaftsspektrum der vorliegenden Überzugsmasse führt.

Die als Komponente A) erfindungsgemäß eingesetzten Polyester werden aus Polycarbonsäuren a) und Polyolen b) hergestellt. Hierbei umfaßt der Begriff Polycarbonsäuren oder Polyole jeweils auch Dicarbonsäuren bzw. Diole, also Verbindungen, die 2 oder mehr der entsprechenden funktionellen Gruppen aufweisen.

Geeignete aromatische Polycarbonsäuren aa) sind u. a. Phthalsäure, Isophthalsäure, Terephthalsäure, Trimellitsäure, Naphthalindicarbonsäuren, Diphenyldicarbonsäuren, Alkyl- oder Halogensubstitution tragende Phthalsäuren, sowie Mischungen daraus.

Zu den erfindungsgemäß einsetzbaren aliphatischen und/oder cycloaliphatischen Polycarbonsäuren bb) gehören u. a. Bernsteinsäure, Adipinsäure, Glutarsäure, Pimelinsäure, Korksäure, Azelainsäure, Sebazinsäure, Hexahydrophthalsäure, Cyclohexyldicarbonsäuren, Tetrahydrophthalsäuren, sowie Mischungen der genannten Substanzen.

Im Rahmen der Erfindung werden aromatische Polycarbonsäuren im bestimmten Verhältnis zu aliphatischen und/oder cycloaliphatischen Polycarbonsäuren eingesetzt, wobei die Bedingung erfüllt sein soll, daß im Falle des Einsatzes von Dicarbonsäuren als Komponente aa) oder bb), wenigstens 50 Mol-% der verwendeten Dicarbonsäuren cyclische Dicarbonsäuren sind. Die cyclischen Dicarbonsäuren können hierbei sowohl zur Gruppe aa) der aromatischen Polycarbonsäuren als auch zur Gruppe bb) der aliphatischen und/oder cycloaliphatischen Polycarbonsäuren gehören, wobei im letzteren Fall der Gruppe bb) natürlich nur die cycloaliphatischen Vertreter in Frage kommen. Anstelle der Säuren können auch die entsprechenden Anhydride eingesetzt werden, falls deren Bildung möglich ist.

Bevorzugte Verbindungen der Komponente A) sind gemäß der Erfindung aus der Gruppe aa) Isophthalsäure, Phthalsäureanhydrid und aus bb) Adipinsäure.

Zu den Polyolen b), mit denen die Polycarbonsäuren a) zum Erhalt der Komponente A) umgesetzt werden, gehören zwei essentielle Verbindungen, die in einem wohl auf die angestrebte Produktqualität abgestimmten Verhältnis eingesetzt werden.

Ein wesentlicher Bestandteil ist dabei aa) 30 - 85 Mol-% Neopentylglycol in Mischung mit dem zweiten essentiellen Polyol-Bestandteil, nämlich 1,3-Propandiol, das in einer Menge von > 15 und < 50 Mol-%, bezogen auf 100 Mol-% Polyole, eingesetzt wird. Die angegebenen Mengen sind kritisch und es hat sich erwiesen, daß sie zur Verwirklichung der Erfindung einzuhalten sind.

Als Polyole sind neben Neopentylglycol und 1,3-Propandiol Diole wie Ethylenglycol, 1,2-Propylenglycol, 1,4-Butandiol, 1,6-Hexandiol, 1,3-Butandiol, Bis-hydroxymethyl-cyclohexan, oder Cyclohexandiol einsetzbar. Neben diesen werden als Triole Glycerin, Trimethylolpropan, Trimethylolethan, 1,2,6-Hexantriol oder ähnliche Verbindungen verwendet.

Dabei sind in bevorzugter Ausführungsform Triole in einer Menge bis zu 50 Mol-% bezogen auf die Gesamtmenge der Polyole in der Polyolkomponente b) enthalten.

Die Menge der Komponenten a) und b) soll erfindungsgemäß die folgende Gleichung erfüllen:

$$X = \frac{n1 - n2(F-2)}{n2}.$$

Daraus folgt beispielsweise für den Fall, daß die eingesetzten Säuren alle eine Funktionalität von 2 aufweisen, daß F = 2 ist, n2 (F-2) = 0 ist und sich das Verhältnis von n1 : n2 damit im Bereich zwischen 1,05 und 1,5 befinden muß. Sofern das Verhältnis der Komponenten a) und b) außerhalb des durch X vorgegebenen Wertebereiches liegt, weisen die wärmehärtbaren Überzugsmassen nicht mehr die erfindungsgemäß in den Beispielen verdeutlichten Eigenschaften auf.

In weiterhin zweckmäßiger Ausgestaltung der Erfindung kennzeichnet sich die wärmehärtbare Überzugsmasse dadurch, daß bis 40 Mol-% der Polyole b) mindestens 4 oder mehr Kohlenstoffatome aufweisen.

In allen Fällen soll bei Einsatz von Diolen der Anteil von Diolen mit aliphatischen Seitenketten wenigstens 30 Mol-% bezogen auf die Gesamtmenge der eingesetzten Diole betragen.

Die Polyester dieser Erfindung haben vorzugsweise einen hohen Anteil cyclischer Verbindungen, insbesondere cyclische Dicarbonsäuren, und sind trotzdem gut verarbeitbar, ohne bei der Herstellung zu kristallisieren. Die erhaltenen Polyester können also über einen längeren Zeitraum bei relativ niedrigen Temperaturen gelagert werden, ohne fest zu werden oder aus der Lösung zu kristallisieren.

Zur Herstellung der Polyester kann jede hierfür geeignete und dem Fachmann geläufige Methode zur Kondensation verwendet werden. Die Polyester können beispielsweise durch Direktveresterung von Polycarbonsäuren oder -säureanhydriden mit aliphatischen Polyolen durch Reaktion von Polycarbonsäurechloriden mit aliphatischen Polyolen oder durch Umsetzung entsprechender Ester mit aliphatischen Polyolen hergestellt werden. Bevorzugte Methode ist jedoch die Direktveresterung.

In bevorzugter Variante ist das Verfahren zur Herstellung der Polyesterkomponente A) dadurch gekennzeichnet, daß eine Mischung der Ausgangskomponenten unter Rühren erwärmt und das freiwerdende Wasser abdestilliert wird, wobei so lange destilliert wird, bis eine Säurezahl (nach DIN) von < 20 erreicht wird und der erhaltene Polyester mit organischen Lösungsmitteln so lange verdünnt wird, bis eine Polyesterlösung mit einer OH-Zahl > 30, bevorzugt > 35, vorliegt.

Als Komponente B) können an sich bekannte N-methylolgruppenhaltige Vernetzungsmittel wie Aminoplaste (das sind Umsetzungsprodukte von Formaldehyd mit z. B. Harnstoff, Dicyandiamid, Aminotriazinen), wie Melamin und Benzoguanamin in teilweise oder vollständig veretherter Form benutzt werden. Die Veretherung kann mit aliphatischen Alkoholen mit bis zu 4 C-Atomen durchgeführt worden sein.

Als Komponente B) werden besonders bevorzugt partiell mit Monoalkoholen veretherte Aminoharze eingesetzt, die Polykondensate aus Melamin, Benzoguanamin und/oder Harnstoff jeweils mit Formaldhyd sind. Als Alkohole zur Veretherung kommen bevorzugt Methanol, Ethanol, n-Propanol, iso-Propanol, Butanol und homologe Monoalkohole in Frage.

Die zur Lösung der Überzugsmassen verwendeten Lösungsmittel C) sind z. B. aromatische Lösungsmittel wie Toluol, Xylol, aromatische Petrolfraktionen wie Solvesso 100, Solvesso 150, darüber hinaus Ketone wie Methyl-isobutylketon, Isophoron, Ethylamylketon, Methylamylketon, Alkohole wie n-Butanol, Amylalkohol, 2-Ethylhexanol und Cyclohexanol, Ether oder Ester wie Acetatester, Methoxyethanol, Ethoxyethanol, Butoxyethanol, Hexoxyethanol, Methoxypropanol, Methoxyethylacetat, Ethoxyethylacetat, bevorzugt jedoch eine Mischung aus 2 oder mehreren der oben genannten Lösungsmittel.

Neben dem bevorzugten Pigment Titandioxid können als Komponente D) andere Pigmente wie Zinkoxide, Eisenoxide, Bentonit, Silikate, Chrompigmente, Pigmentruß u. ä. verwendet werden, um einen opaken oder pigmentierten Film der gewünschten Deckkraft zu erhalten.

Als Additive E) werden z. B. Verlaufshilfsmittel, Antiabsetzmittel, Antioxidantien, UV-Stabilisatoren, Thixotropierungsmittel, Rostschutzmittel, Weichmacher, Glanzverbesserer, Benetzungsmittel, Wachse und Katalysatoren, die zur Erzielung von hochwertigen Deckschichten beitragen, verwendet.

Die Überzugsmassen werden u. a. in der Herstellungsweise, wie sie z. B. in den Beispielen 1 - 11 erläutert wird, hergestellt. Das Auftragen kann durch gängige lacktechnische Methoden wie Rollen, Sprühen, Bürsten, Sprenkeln oder Tauchen erfolgen.

Geeignete Untergründe sind vor allem vorbehandelte oder rohe metallische Substrate wie Eisen oder Stahl, galvanisiertes Eisen oder galvanisierter Stahl, Aluminium oder sonstige Metallbleche. Die beschriebenen wärmehärtbaren Polyesterbeschichtungen finden Anwendungen in industriellen Lackierungen, vor allem im Bereich Coil-Coating, Can-Coating und Automobillackierungen.

Die erfindungsgemäßen Überzugsmassen weisen eine gute Verträglichkeit aller Bestandteile, gute Elastizität, gute Haftung der resultierenden Überzüge, hohen Glanz und gute Resistenz gegen Witterungseinflüsse auf.

In besonders bevorzugter Ausführungsform kennzeichnet sich eine erfindungsgemäße Überzugsmasse dadurch, daß sie eine Erichsen-Tiefung $\geq$ 5 mm und/oder eine Pendelhärte (nach König) > 150 aufweist.

Die nachfolgenden Beispiele erläutern die Erfindung gegenüber nichterfindungsgemäßen Vergleichsbeispielen.

Beispiel A1

In einen Vierhalskolben mit Rührer, Verdünnungsgefäß, elektrische Widerstandheizung, Thermoelement und Rückflußkühler mit aufgesetztem Kopfthermometer plus Destillationsbrücke mit Vorlagegefäß werden 996,3 g Isophthalsäure, 142,2 g Adipinsäure, 103,5 g 1,3-Propandiol und 691,6 g Neopentylglycol mit 0,71 g Fascat 4100 eingewogen. Nach Sättigung mit Stickstoff wird die Mischung auf 120 °C erhitzt und das jetzt rührfähige Gemisch unter Rühren weiter auf 190 °C erwärmt, wobei das freiwerdende Wasser aodestilliert wird. Der Rückflußkühler wird dabei auf 120 - 125 °C gehalten, um ein Abdestillieren anderer Bestandteile zu verhindern. Innerhalb 6,5 h wird die Temperatur auf 210 °C gesteigert, wobei die Kolonnenkopf-Temperatur 103 °C nicht übersteigt. Unter Anlegen eines schwachen Vakuums wird weiter verestert, bis eine Säurezahl (nach DIN) von < 20 erreicht ist. Dann wird auf 120 °C abgekühlt und der Polyester mit einer 1 : 1-Mischung aus Shellsol A und Butylglycol verdünnt, bis eine 60 %ige Lösung des Polyesters mit einer OH-Zahl von 63, bezogen auf den festen Polyester, vorliegt.

Beispiele A2 bis A4:

Analog Beispiel A1 werden Polyester hergestellt, wobei jedoch das Diolverhältnis variiert wurde. Ansatzmengen und Reaktionszeiten sowie OH-Zahlen sind in Tabelle 1 angegeben.

Beispiel A7:

In die unter A1 beschriebene Apparatur werden 165 g Neopentylglycol, 81,8 g Trimethylolpropan, 108,4 g Phthalsäureanhydrid, 121,5 g Isophthalsäure, 122,5 g Adipinsäure, 55,7 g 1,3-Propandiol, 15 g Xylol und 1 g Dibutylzinnoxid eingewogen. Nach Sättigung mit Stickstoff wird das Gemisch auf 160 °C erwärmt, wobei das Gemisch ab 100 °C rührfähig ist. Ab 160 °C destilliert zuerst Xylol mit Wasser und dann Wasser ab. Innerhalb 5 h wird die Temperatur auf 220 °C erhöht. Bei Erreichen einer Säurezahl < 20 wird der Polyester auf 140 °C abgekühlt und mit einer 1 : 1-Mischung Xylol / 2-Ethoxyethylacetat verdünnt, bis eine 60 %ige Lösung des Polyesters entstanden ist.

Beispiel A8:

Es wird analog, wie in A7 beschrieben, ein Polyester hergestellt. Ansatzmengen sowie Reaktionszeit und OH-Zahl des entstehenden Polyesters sind in Tabelle 2 angegeben.

Vergleichsbeispiele A9 bis A11:

Die in den Vergleichsbeispielen A9 bis A11 beschriebenen Polyester werden in Analogie zum Polyester, wie unter A1 beschrieben, hergestellt. Allerdings wurde hierbei 1,3-Propandiol durch andere Diole ersetzt. Ansatzmengen, Reaktionszeit sowie Säure- und OH-Zahlen der Polyester sind in Tabelle 1 angegeben.

Vergleichsbeispiele A12:

Wie unter A1 beschrieben, erfolgt die Herstellung eines Polyesters, wobei jedoch als Diolkomponente zu 100 % NPG verwendet wird (vgl. Tabelle 1). Allerdings kristallisiert der Polyester, gelöst zu 60 % in Shellsol AB und Butylglycol 1 : 1 , bereits in der Wärme bei 30 °C aus, so daß er für die Herstellung eines Lackes nicht geeignet ist.

Formulierungsbeispiel B 1:

In einer Kugelmühle werden 200 g Titanox 2190, 0,8 g Bentone 38, 173,6 g des 60 %igen Polyesters aus Beispiel A1, 16 g Ethylenglycol und 160 g Shellsol AB abgerieben, bis eine homogene Paste entsteht. 68,8 g dieser Paste wird mit 1 g Isobutanol, 1 g Modaflow, 20 g des 60 %igen Polyesters aus Beispiel A1, 6,3 g Cymel 303, 4,0 g 2-Ethoxyethylacetat und 0,5 g Nacure X 49 LD dispergiert. Der erhaltene Einbrennlack hat eine Auslaufgeschwindigkeit von 30 sec (DIN-Becher, 4 mm). Die Zusammensetzung der Überzugsmasse in Gewichtsteilen ist in Tabelle 3 angegeben.

Formulierungsbeispiele B2 bis B4, B7 und B8:

Analog Beispiel B1 wird je eine Überzugsmasse formuliert, wobei anstelle des Polyesters A1 nun die Polyester nach Beispielen A2 bis A4, bzw. A7 und A8 verwendet werden. Die Ansatzverhältnisse sind in Tabelle 3 angegeben.

Formulierungsbeispiel B5 und B6:

Die Formulierungen werden analog B1 hergestellt, allerdings mit geänderter Zusammensetzung der Verhältnisse Polyester zu Melaminharz. Ansatzverhältnisse sind in Tabelle 3 angegeben.

Vergleichsformulierungen B9 bis B11:

Die Vergleichsformulierungen B9 bis B11 werden analog der Vorschrift B1 hergestellt, allerdings unter Verwendung der Polyester nach A9 - A11. Ansatzmengen sind wiederum in Tabelle 3 angegeben.

Herstellung der Überzüge C 1 bis C11:

Zur Herstellung der Überzüge werden auf mit Eisenphosphatierung passivierten Blechen (Bonder 2660 OC, Firma Chemetall GmbH), die nach B1 bis B11 formulierten Beschichtungsmassen aufgetragen (Naßfilmdicke 125 - 150 µm) und 5 min abgelüftet. Anschließend wird die Überzugsmasse 10 min bei 160 °C eingebrannt. Die Ergebnisse der lacktechnischen Eigenschaften sind in Tabelle 4 angegeben. Die beschriebenen, ausgehärteten Überzüge C1 bis C11 korrespondieren jeweils zu der entsprechenden Formulierung von B1 bis B11.

Bestimmung der lacktechnischen Eigenschaften:

A     Pendelhärte nach König nach DIN 53 157
B     Trockenfilmdicke nach DIN 50 981 bzw. ISO 2178
C     Erichsen Tiefung nach DIN ISO 1520
D     Gitterschnitt nach DIN 53 151
E     Glanzmessung nach DIN 67 530 (Dr. Lange Reflektometer Typ LMG 064)

F    Schnellbewitterung mit QUV Accelerated Weathering Tester, Lampe: UVA, Zyclus: 6 h Trockenbestrahlung (55 °C) und 6 h Betauung ohne UV-Bestrahlung (40 °C, 100 % Luftfeuchte)

Ferner bedeuten:

Cymel 303    = Hexa(methoxymethyl)melamin
Nacure 49 LD    = Aminblockierte Dinonylnaphtalindisulfonsäure 38 %ig in Isopropanol/i-Butanol/Wasser
Rx-Zeiten    = Reaktionszeit in Stunden
TMP    = 1,1,1-Trimethylolpropan

Tabelle I

| Polyesterbsp. | A1 | A2 | A3 | A4 | A9 | A10 | A11 | A12 |
|---|---|---|---|---|---|---|---|---|
| Isophthalsäure [g] | 996,3 | 996,3 | 996,3 | 996,3 | 497,1 | 498,4 | 497,3 | 443,2 |
| Adipinsäure [g] | 142,2 | 142,2 | 142,2 | 142,2 | 70,9 | 71,0 | 70,9 | 63,2 |
| Neopentylglycol [g] | 691,6 | 626,4 | 564,2 | 416,7 | 312,5 | 312,4 | 312,5 | 370,8 |
| Diol-Art | 1,3-PD | 1,3-PD | 1,3-PD | 1,3-PD | EG | 1,2-PD | 1,6-HD | -- |
| Menge [g] | 103,5 | 152,6 | 197,9 | 305,1 | 62,1 | 76,0 | 118,2 | -- |
| Fascat 4100 [g] | 0,71 | 0,71 | 0,71 | 0,68 | 0,35 | 0,35 | 0,37 | 0132 |
| Rx-Zeit [h] | 6 | 5,5 | 4,5 | 5 | 6 | 6 | 4,75 | 6 |
| Säurezahl | 7 | 20 | 6 | 9 | 20 | 16 | 9 | 18 |
| OH-Zahl | 63 | 36 | 62 | 38 | 45 | | | |
| Mol-Verhältnis NPG: Diol | 83:17 | 75:25 | 67,5: 32,5 | 50:50 | 75:25 | 75:25 | 75:25 | 100:0 |
| 1,2-PD = 1,2-Propandiol 1,3-PD = 1,3-Propandiol EG = Ethylenglycol 1,6-HD = 1,6-Hexandiol NPG: Diol = Neopentylglycol/Diol-Verhältnis | | | | | | | | |

Tabelle II

| Polyesterbsp. | A7 | A8 |
|---|---|---|
| Isophthalsäure [g] | 121,5 | 121,5 |
| Adipinsäure [g] | 122,5 | 122,5 |
| Phthalsäureanhydrid [g] | 108,4 | 108,4 |
| NPG [g] | 165,0 | 76,1 |
| TMP [g] | 81,8 | 81,8 |
| Diol | 1,3-PD | 1,3-PD |
| Menge [g] | 55,7 | 120,5 |
| Xylol [g] | 15 | 15 |
| Dibutylzinnoxid [g] | 1 | 1 |
| Rx-Zeit | 5 | 5 |
| Säurezahl | 13 | 15 |
| NPG = Neopentylglycol TMP = Trimethylolpropan | | |

Tabelle III

| (Angaben in Massenteilen) | | | | | | | | | | | |
|---|---|---|---|---|---|---|---|---|---|---|---|
| Formulierung | B1 | B2 | B3 | B4 | B5 | B6 | B7 | B8 | B9 | B10 | B11 |
| Polyester | A1 | A2 | A3 | A4 | A3 | A4 | A7 | A8 | A9 | A10 | A11 |
| (60%ig in Butylglycol Shellsol AB) | 217 | 217 | 217 | 217 | 217 | 217 | 217 | 217 | 217 | 217 | 217 |
| Titandioxid 2190 | 250 | 250 | 250 | 250 | 250 | 250 | 250 | 250 | 250 | 250 | 250 |
| Ethylglycol | 20 | 20 | 20 | 20 | 20 | 20 | 20 | 20 | 20 | 20 | 20 |
| Shellsol AB | 200 | 200 | 200 | 200 | 200 | 200 | 200 | 200 | 200 | 200 | 200 |
| Bentone 38 | 1 | 1 | 1 | 1 | 1 | 1 | 1 | 1 | 1 | 1 | 1 |
| Isobutanol | 10 | 10 | 10 | 10 | 10 | 10 | 10 | 10 | 10 | 10 | 10 |
| Modaflow | 10 | 10 | 10 | 10 | 10 | 10 | 10 | 10 | 10 | 10 | 10 |
| PES, 60 % | A2 | A2 | A2 | A4 | A2 | A2 | A7 | A8 | A9 | A10 | A11 |
| Menge | 200 | 200 | 200 | 201 | 200 | 200 | 200 | 200 | 204 | 200 | 200 |
| Cymel 303 | 64 | 64 | 64 | 64 | 42 | 83 | 64 | 64 | 64 | 64 | 65 |
| 2-Ethoxyethylacetat | 40 | 40 | 40 | 40 | 40 | 40 | 40 | 40 | 40 | 40 | 40 |
| Nacure X 49 LD | 5 | 5 | 5 | 5 | 5 | 5 | 5 | 5 | 5 | 5 | 5 |
| Summe | 1017 | 1017 | 1017 | 1018 | 996 | 1037 | 1017 | 1017 | 1021 | 1017 | 1018 |
| Auslaufzeit (DIN Becher, 4 mm) | 55 | 30 | 26 | 23 | 35 | 30 | 15 | 15 | 22 | 21 | 40 |

Tabelle IV

| ausgehärtete Überzüge | C1 | C2 | C3 | C4 | C5 | C6 | C7 | C8 | C9 | C10 | C11 |
|---|---|---|---|---|---|---|---|---|---|---|---|
| Formulierung | B1 | B2 | B3 | B4 | B5 | B6 | B7 | B8 | B9 | B10 | B11 |
| Trockenfilmdicke (µm) | 41 | 38 | 42 | 38 | 38 | 37 | 39 | 33 | 35 | 40 | 39 |
| Pendelhärte (König) | 170 | 160 | 165 | 125 | 150 | 140 | 155 | 125 | 165 | 150 | 120 |
| Erichsentiefung (mm) | 7,6 | 6,8 | 7,9 | 8,2 | 6,3 | 7,2 | 5,3 | 6,4 | 3,5 | 1,8 | 8,1 |
| Gitterschnitt (mm) | 0 | 0 | 0 | 0 | 0 | 0 | 0-1 | 0-1 | 0 | 0 | 0 |
| Glanz | | | | | | | | | | | |
| 20 o | 34 | 41 | 48 | 41 | 25 | 27 | 20 | 22 | 34 | 11 | 48 |
| 60 o | 80 | 84 | 85 | 83 | 77 | 76 | 69 | 71 | 80 | 51 | 85 |
| 80 o | 87 | 92 | 94 | 92 | 85 | 85 | 86 | 89 | 88 | 67 | 94 |
| Schnellbewitterung Glanz bei 60 o | | | | | | | | | | | |
| 0-Wert | | 84 | | 83 | | | | | 80 | | 86 |
| 500 h | | 84 | | 67 | | | | | 74 | | 85 |
| 1000 h | | 81 | | 65 | | | | | 70 | | 80 |
| 1500 h | | 79 | | 60 | | | | | 68 | | 68 |
| 2000 h | | 76 | | 48 | | | | | 58 | | 59 |

## Patentansprüche

1. Wärmehärtbare Überzugsmasse bevorzugt zur Ausbildung harter und flexibler Beschichtungen auf Metallgegenständen,
**gekennzeichnet durch**
eine Zusammensetzung von

A) 10 - 50 Gew.-% eines oder mehrerer Polyester, erhältlich durch Verestern eines Gemisches von

a) aromatischen und aliphatischen und/oder cycloaliphatischen Polycarbonsäuren, wobei unter den Polycarbonsäuren

aa) 40 - 90 Mol-% aromatische Polycarbonsäuren und
bb) 60 - 10 Mol-% aliphatische und/oder cycloaliphatische Polycarbonsäuren sind,

mit der Bedingung, daß bei Einsatz von Dicarbonsäuren wenigstens 50 Mol-% der verwendeten Dicarbonsäuren cyclische Dicarbonsäuren sind,
mit
b) Polyolen, wobei unter den Polyolen

aa) 30 - 85 Mol-% Neopentylglycol und
bb) > 15 - < 50 Mol-% 1,3-Propandiol sind,

mit der Bedingung, daß bei Einsatz von Diolen wenigstens 30 Mol-% der eingesetzten Diole aliphatische Seitenketten aufweisen,

wobei die Menge der Komponenten a) und b) die folgende Gleichung erfüllen muß

$$X = \frac{n1 - n2(F-2)}{n2},$$

in der

n1    die Molzahl der Polyole b),
n2    die Molzahl der Polycarbonsäuren a) und
F     den Mittelwert der molaren Funktionalität der Polycarbonsäuren

bedeutet und

X     einen Wert zwischen 1,05 und 1,5 aufweist;

B) 5 - 40 Gew.-% partiell mit Monoalkoholen verethertes Polykondensat in Form von

    a) Melamin-Formaldehydharz mit einem Molverhältnis von Melamin zu Formaldehyd von 1 : 4,5 bis 1 : 6,
    b) Benzoguanamin-Formaldehydharz mit einem Molverhältnis von Benzoguanamin zu Formaldehyd von 1 : 2,5 bis 1 : 4 und/oder
    c) Harnstoff-Formaldehydharz mit einem Molverhältnis von Harnstoff zu Formaldehyd von 1 : 2,5 bis 1 : 6;

C) 15 - 50 Gew.-% organische, üblicherweise zur Lackherstellung verwendete Lösungsmittel;

D) 0 - 40 Gew.-% Pigmente; und

E) ggf. Additiven, wie sie üblicherweise zur Lackherstellung verwendet werden, in einer Menge von bis zu 100 Gew.-% zusätzlich bezogen auf 100 Gew.-% der Komponenten A) bis D).

2.   Wärmehärtbare Überzugsmasse nach Anspruch 1
     **dadurch gekennzeichnet,**
     daß bis 50 Mol-% der Polyole b) Triole sind.

3.   Wärmehärtbare Überzugsmasse nach Anspruch 1 oder 2,
     **dadurch gekennzeichnet,**
     daß bis 40 Mol-% der Polyole b) mindestens 4 oder mehr Kohlenstoffatome aufweisen.

4.   Wärmehärtbare Überzugsmasse nach einem der vorhergehenden Ansprüche,
     **gekennzeichnet durch**
     eine Erichsen-Tiefung ≧ 5 mm und/oder eine Pendelhärte (nach König) > 150.

5.   Verfahren zur Herstellung eines Polyesters vom Typ A) wie er in der gemäß den Ansprüchen 1 bis 4 definierten wärmehärtbaren Überzugsmasse eingesetzt wird,
     **dadurch gekennzeichnet,**
     daß eine Mischung der Ausgangskomponenten unter Rühren erwärmt und das freiwerdende Wasser abdestilliert wird, wobei so lange destilliert wird, bis eine Säurezahl (nach DIN) von < 20 erreicht wird und der erhaltene Polyester mit organischen Lösungsmitteln so lange verdünnt wird, bis eine Polyesterlösung mit einer OH-Zahl > 30, bevorzugt > 35, vorliegt.

6.   Verwendung der wärmehärtbaren Überzugsmasse gemäß Anspruch 1 bis 4 als Coil-Coating-Lack.